# EUROPEAN PATENT APPLICATION

(11) **EP 3 067 555 A1**
(43) Date of publication of application: **14.09.2016**
(21) Application number: 16159856.0
(22) Date of filing: 11.03.2016
(51) Int. Cl.: F03D 7/02, F03D 80/60

(54) **SYSTEM AND METHOD FOR REDUCING FAN NOISE DURING NOISE REDUCED OPERATION OF A WIND TURBINE**

(30) Priority: 12.03.2015 US 201514645763
(71) Applicant: General Electric Company, Schenectady, NY 12345 (US)
(72) Inventor: PETERSEN, Andreas, 48499 DE Salzbergen (DE); HONHOFF, Saskia Gerarda, 85748 DE Garching b Munchen (DE); KOSCHINSKY, Markus, 48499 DE Salzbergen (DE)
(74) Representative: Bedford, Grant Richard

(57) **Abstract**

The present disclosure is directed to a system and method 100 for reducing noise associated with a wind turbine 10, more particularly fan noise when the wind turbine 10 is operating under a reduced noise operating mode. More specifically, the method 100 includes operating 102 the wind turbine at a predetermined rotor speed that is associated with a predetermined power output. The method also includes receiving 104 a request to operate in a reduced noise operating mode and in response to the request, reducing 106 the predetermined rotor speed so as to provide a reduced power output. In response to reducing the predetermined rotor speed, another step 108 includes reducing a speed of one or more cooling fans of the wind turbine.

## Description

The present disclosure relates generally to wind turbines, and more particularly to systems and methods for reducing fan noise during noise reduced operation (NRO) of a wind turbine.

Wind power is considered one of the cleanest, most environmentally friendly energy sources presently available, and wind turbines have gained increased attention in this regard. A modem wind turbine typically includes a tower, a generator, a gearbox, a nacelle, and one or more rotor blades. The nacelle includes a rotor coupled to the gearbox and to the generator. The rotor and the gearbox are mounted on a bedplate support frame located within the nacelle. More specifically, in many wind turbines, the gearbox is mounted to the bedplate via one or more torque supports or arms. The rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy that may be deployed to a utility grid.

In many instances, the gearbox and/or the generator include one or more cooling fans to maintain operating temperatures within design limits. Such cooling fans generate noise that is typically masked by rotor blade noise and/or wind experienced during normal operation. At certain times, it may be necessary for the wind turbine to operate in a Noise Reduced Operation (NRO) mode, which reduces the sound levels produced by the turbine and effectively limits the turbines' maximum speed and power output. For example, at night, it may be beneficial to operation in the NRO mode so as to limit noise heard by neighbors of the wind turbine. Further, NRO may be activated and deactivated as a function of wind direction and/or wind speed. During NRO, however, cooling fan noise can become audible causing the noise level of the wind turbine to surpass a desired threshold.

In view of the aforementioned, improved systems and methods that adjust cooling fan speed during NRO so as to maintain the noise level within prescribed limits would be advantageous.

Various aspects and advantages of the invention will be set forth in part in the following description, or may be clear from the description, or may be learned through practice of the invention.

In one aspect, the present disclosure is directed to a method for reducing noise, particularly fan noise, associated with a wind turbine. The method includes operating the wind turbine at a predetermined rotor speed. The predetermined rotor speed is associated with a predetermined power output. Another step includes receiving a request to operate in a reduced noise operating mode and in response to the request, reducing the predetermined rotor speed so as to reduce the power output. In response to reducing the rotor speed, the method also includes reducing a speed of one or more cooling fans of the wind turbine so as to reduce associated fan noise.

In one embodiment, the step of reducing the speed of one or more cooling fans of the wind turbine may include turning off one or more of the cooling fans. In certain embodiments, the step of reducing the speed of one or more of the cooling fans may include correlating a reduction in fan speed with a reduction in rotor speed.

In particular embodiments, the one or more cooling fans may be configured with a drivetrain assembly of the wind turbine. More specifically, the drivetrain assembly may include a gearbox and/or a generator. Further, in certain embodiments, the gearbox may include at least one high speed fan and at least one low speed fan. As such, additional embodiments may include monitoring a temperature of the gearbox after reducing the predetermined power set point and adjusting the speed of at least one of the high speed fan or the low speed fan based on the temperature.

In another embodiment, the method may also include monitoring a temperature of the generator after reducing the predetermined power set point and adjusting the speed of at least one of the cooling fans of the generator based on the temperature.

In a further embodiment, the method may include increasing a rotor speed back to the predetermined rotor speed after a predetermined time period. In addition, in certain embodiments, the method may also include increasing the speed of the one or more cooling fans with the power set point after the predetermined time period.

In another aspect, the present disclosure is directed to a method for reducing fan noise associated with a wind turbine during a reduced noise operating mode. For example, the method includes operating the wind turbine in a standard operating mode via a controller. The standard operating mode is associated with a first noise threshold. Another step includes switching from the standard operating mode to a reduced noise operating mode. The reduced noise operating mode is associated with a second noise threshold that is lower than the first noise threshold. In response to switching operating modes, the method also includes adjusting a speed of one or more cooling fans of the wind turbine so as to reduce associated fan noise. It should also be understood that the method may include any of the additional steps and/or features as described herein.

In yet another aspect, the present disclosure is directed to a system for reducing fan noise associated with a wind turbine. The system includes a controller communicatively coupled to a processor. The processor is configured to perform one or more operations, including but not limited to operating the wind turbine at a predetermined rotor speed, the predetermined rotor speed associated with a predetermined power output, receiving a request to operate in a reduced noise operating mode, reducing the predetermined rotor speed so as to provide a reduced power output in response to the request, and in response to reducing the predetermined rotor speed, reducing a speed of one or more cooling fans of the wind turbine. It should also be understood that the system may include any of the additional features as described herein.

Various features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention. In the drawings:
FIG. 1 illustrates a perspective view of one embodiment of a wind turbine according to one embodiment of the present disclosure;
FIG. 2 illustrates a perspective view of a simplified, internal view of one embodiment of a nacelle of a wind turbine according to the present disclosure;
FIG. 3 illustrates a block diagram of one embodiment of a controller of a wind turbine and/or or wind farm according to the present disclosure;
FIG. 4 illustrates a cross-sectional, internal view of one embodiment of a generator of a wind turbine, particularly illustrating a cooling fan configured therewith, according to the present disclosure;
FIG. 5 illustrates a cross-sectional, internal view of one embodiment of a gearbox of a wind turbine, particularly illustrating a plurality of cooling fans configured therewith, according to the present disclosure;
FIG. 6 illustrates a graph of sound power level versus wind speed for a wind turbine according to conventional construction;
FIG. 7 illustrates a graph of one embodiment of sound power level versus wind speed for a wind turbine according to the present disclosure; and
FIG. 8 illustrates a flow diagram of one embodiment of a method for reducing noise associated with a wind turbine, particularly during a reduced noise operation mode, according to the present disclosure.

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Generally, the present disclosure is directed to systems and methods for reducing noise associated with a wind turbine, particularly fan noise when the wind turbine is operating in noise reduced noise operation (NRO). The wind turbine normally operates at a predetermined rotor speed that is associated with a predetermined power output. At certain times (e.g. at night), the wind turbine is operated at a reduced rotor speed or a reduced operating mode that is associated with a reduced power output. The rotor speed is directly correlated to noise associated with the wind turbine. As such, if the rotor speed decreases, the associated noise also decreases and vice versa. During times of reduced operation, the cooling fan noise associated with the drivetrain assembly can become audible. As such, the noise created by the fans may cause the overall noise level of the wind turbine to exceed allowable limits. Therefore, the present disclosure provides a system and method that adjusts the speed of one or more cooling fans in response to reducing the predetermined rotor speed so as to reduce the noise generated by the fans.

The present disclosure provides many advantages not present in the prior art. For example, by reducing the fan speed during low noise operation, the wind turbine can be operated in a variety of low noise modes, which can increase annual energy production (AEP) at noise critical sites. The present disclosure also provides sufficient cooling in both normal operation (full speed fans) and noise reduced operation (partial speed fans).

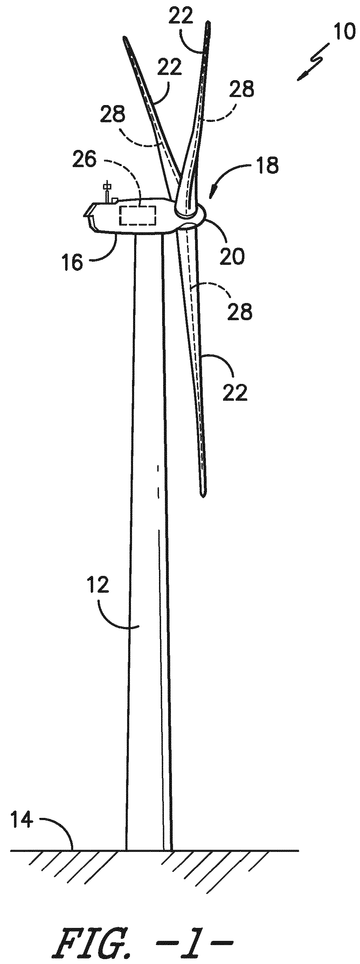

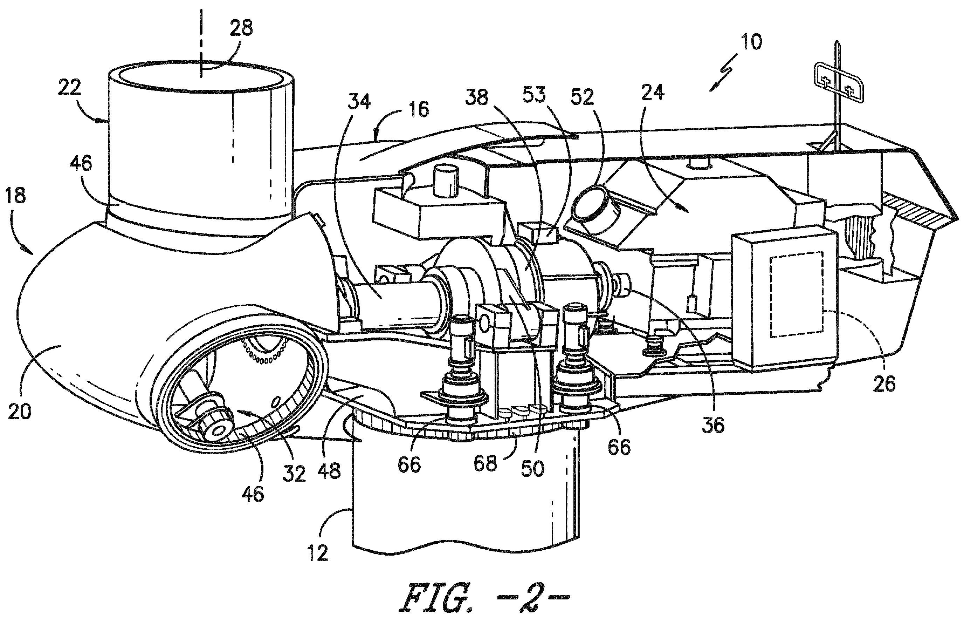

Referring now to the drawings, FIG. 1 illustrates a perspective view of one embodiment of a wind turbine 10 according to the present disclosure. As shown, the wind turbine 10 generally includes a tower 12 extending from a support surface 14, a nacelle 16 mounted on the tower 12, and a rotor 18 coupled to the nacelle 16. The rotor 18 includes a rotatable hub 20 and at least one rotor blade 22 coupled to and extending outwardly from the hub 20. For example, in the illustrated embodiment, the rotor 18 includes three rotor blades 22. However, in an alternative embodiment, the rotor 18 may include more or less than three rotor blades 22. Each rotor blade 22 may be spaced about the hub 20 to facilitate rotating the rotor 18 to enable kinetic energy to be transferred from the wind into usable mechanical energy, and subsequently, electrical energy. For instance, the hub 20 may be rotatably coupled to an electric generator 24 (FIG. 2) positioned within the nacelle 16 to permit electrical energy to be produced.

The wind turbine 10 may also include a wind turbine controller 26 centralized within the nacelle 16. However, in other embodiments, the controller 26 may be located within any other component of the wind turbine 10 or at a location outside the wind turbine 10. Further, the controller 26 may be communicatively coupled to any number of the components of the wind turbine 10 in order to control the components. As such, the controller 26 may include a computer or other suitable processing unit. Thus, in several embodiments, the controller 26 may include suitable computer-readable instructions that, when implemented, configure the controller 26 to perform various different functions, such as receiving, transmitting and/or executing wind turbine control signals.

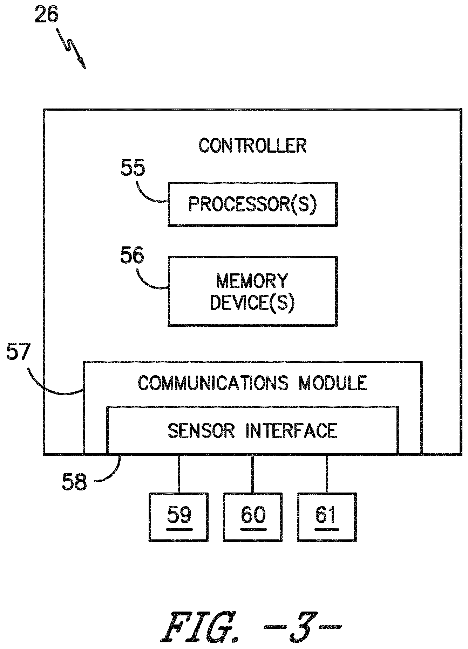

Example components that may be included within one embodiment of the controller 26 are illustrated in FIG. 3. As shown, the controller 26 may include one or more processor(s) 55 and associated memory device(s) 56 configured to perform a variety of computer-implemented functions (e.g., performing the methods, steps, calculations and the like and storing relevant data as disclosed herein). Additionally, the controller 26 may also include a communications module 57 to facilitate communications between the controller 26 and the various components of the wind turbine 10. Further, the communications module 57 may include a sensor interface 58 (e.g., one or more analog-to-digital converters) to permit signals transmitted from one or more sensors 59, 60, 61 (such as the sensors described herein) to be converted into signals that can be understood and processed by the processors 55. It should be appreciated that the sensors 59, 60, 61 may be communicatively coupled to the communications module 57 using any suitable means. For example, as shown, the sensors 59, 60, 61 are coupled to the sensor interface 58 via a wired connection. However, in other embodiments, the sensors 59, 60, 61 may be coupled to the sensor interface 58 via a wireless connection, such as by using any suitable wireless communications protocol known in the art.

As used herein, the term "processor" refers not only to integrated circuits referred to in the art as being included in a computer, but also refers to a controller, a microcontroller, a microcomputer, a programmable logic controller (PLC), an application specific integrated circuit, and other programmable circuits. Additionally, the memory device(s) 56 may generally comprise memory element(s) including, but not limited to, computer readable medium (e.g., random access memory (RAM)), computer readable non-volatile medium (e.g., a flash memory), a floppy disk, a compact disc-read only memory (CD-ROM), a magneto-optical disk (MOD), a digital versatile disc (DVD) and/or other suitable memory elements. Such memory device(s) 56 may generally be configured to store suitable computer-readable instructions that, when implemented by the processor(s) 55, configure the controller 26 to perform various functions as described herein.

Referring now to FIG. 2, a simplified, internal view of one embodiment of the nacelle 16 of the wind turbine 10 shown in FIG. 1 is illustrated. As shown, the generator 24 may be coupled to the rotor 18 for producing electrical power from the rotational energy generated by the rotor 18. For example, as shown in the illustrated embodiment, the rotor 18 may include a rotor shaft 34 coupled to the hub 20 for rotation therewith. The rotor shaft 34 may, in turn, be rotatably coupled to a generator shaft 36 of the generator 24 through a gearbox 38. Further, the gearbox 38 is connected to a bedplate support frame 48 by one or more torque supports 50. As is generally understood, the rotor shaft 34 provides a low speed, high torque input to the gearbox 38 in response to rotation of the rotor blades 22 and the hub 20. The gearbox 38 then converts the low speed, high torque input to a high speed, low torque output to drive the generator shaft 36 and, thus, the generator 24.

Each rotor blade 22 may also include a pitch adjustment mechanism 32 communicatively coupled to the controller 26 and configured to rotate each rotor blade 22 about its pitch axis 28 (e.g. via a pitch bearing 46), depending on the wind speed and/or wind direction. As such, pitching the blades 22 directly affects the power output of the generator 24. Similarly, the wind turbine 10 may include one or more yaw drive mechanisms 66 communicatively coupled to the controller 26, with each yaw drive mechanism(s) 66 being configured to change the angle of the nacelle 16 relative to the wind (e.g., by engaging a yaw bearing 68 of the wind turbine 10).

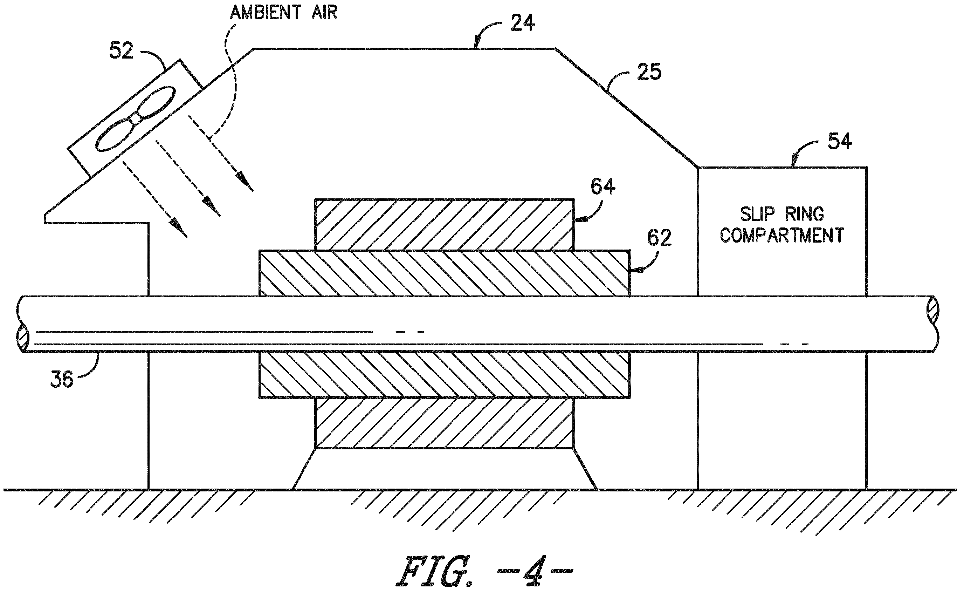

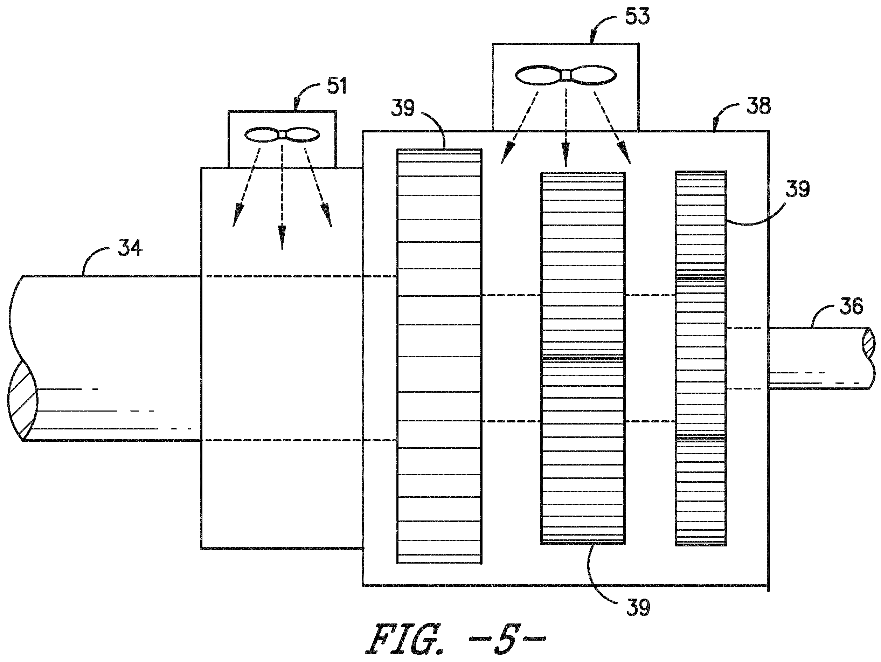

Referring now to FIG. 4, a detailed, cross-sectional view of one embodiment of the generator 24 according to the present disclosure is illustrated. As shown, the generator 24 includes a generator housing 25 that contains a rotor assembly 62 having rotor windings which rotates about the rotatable shaft 36 and a stator 64 having stator windings. Further, as shown, the rotor assembly 62 is operatively coupled with the stator 64. More specifically, the rotor assembly 62 of the generator 24 is mechanically connected to the wind turbine 10 through the drivetrain system (i.e. the high and low speed shafts 34, 36, bearings, and the gearbox 38). The generator 24 also includes a slip ring assembly (not shown) housed a slip ring compartment 54 that applies current to the rotor assembly 62. Similarly, FIG. 5 illustrates a detailed, cross-sectional view of one embodiment of the gearbox 38 according to the present disclosure. More specifically, as shown, the gearbox 38 converts the low speed, high torque input of the low-speed shaft 34 to a high speed, low torque output via one or more gears 39 to drive the generator shaft 36 and, thus, the generator 24.

Operative elements in the generator 24 and/or gearbox 38 can overheat, thereby causing damage to the drivetrain assembly. As such, various cooling components may be configured with the generator 24 and/or gearbox 38 so as to cool the components thereof. For example, as shown in FIGS. 2, 4, and 5, the generator 24 and gearbox 38 typically include at least one cooling fan (e.g. fans 51, 52, 53) configured on an external surface thereof. More specifically, as indicated by the dotted lines of FIGS. 4 and 5, the cooling fans 51, 52, 53 are configured to direct cool air across the internal components of the generator 24 (e.g. the rotor assembly 62 and/or the stator 64) and/or the gearbox 38 (e.g. planet gears, sun gear, ring gear, etc.) so as to maintain the internal temperatures of the drivetrain assembly within safe limits.

It should be understood that the wind turbine 10 may include any suitable number and type of cooling fans at any location and the figures are provided for illustrative purposes only. More specifically, as shown in FIG. 4, the generator 24 includes at least one cooling fan 52 having multiple settings. In addition, as shown in FIG. 5, the gearbox 38 includes at least one high speed fan 53 and at least one low speed fan 51.

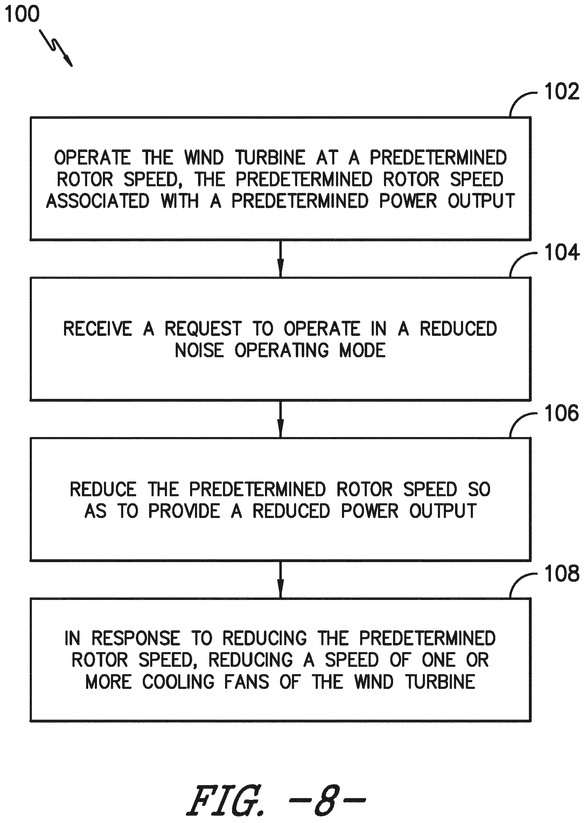

Referring now to FIG. 8, a flow diagram of one embodiment of a method 100 that may be implemented by the controller 26 for reducing noise associated with the cooling fans 51, 52, 53 as described herein is illustrated. As shown at 102, the controller 26 is configured to operate the wind turbine 10 in a standard operating mode at a predetermined rotor speed. The predetermined rotor speed is associated with a predetermined power output (e.g. rated power). During normal operation, noise generated by the cooling fans 51, 52, 53 is generally masked by rotor and/or wind noise and is therefore not an issue. Therefore, the fans 51, 52, 53 are typically operated at full speed.

At 104, the method 100 includes receiving a request to operate in a reduced noise operating mode. As such, at 106, the method 100 includes reducing the predetermined rotor speed so as to provide a reduced power output. For example, many wind turbines operate in noise reduced operation (NRO) at night so as to be considerate of neighboring residents. Still other wind conditions or circumstances may require NRO. For example, in certain embodiments, NRO may be activated and deactivated as a function of wind direction and/or wind speed. In NRO, the wind turbine 10 produces less power, therefore, there are typically less drivetrain losses and less heat being generated. When the rotor speed is reduced, however, the fan noise can become audible and can exceed allowable noise limits. As such, at 108, the method 100 includes reducing the speed of one or more of the cooling fans 51, 52, 53 of the wind turbine 10 in response to reducing the rotor speed. The adjusted fan speed reduces the fan noise such that when combined with rotor and/or wind noise, the total noise is less than a noise threshold. Since the air temperature is typically lower at night when most NRO occurs, the reduced fan speed is still effective at cooling the drivetrain assembly.

More specifically, in certain embodiments, the controller 26 is configured to automatically reduce one or more fan speeds or turn off one or more fans 51, 52, 53 or a combination thereof in response to reducing the predetermined power set point. In further embodiments, the fan speeds may be adjusted manually, for example, by an operator. Further, depending on the actual fan noise as compared with a noise threshold, the controller 26 may turn off one of the fans 51, 52, 53 and/or reduce a speed of another. In further embodiments, the controller 26 may turn off all the fans 51, 52, 53 or simply reduce the speed of all the fans 51, 52, 53. The controller 26 may also be configured to correlate the reduction in fan speed with a reduction in rotor speed.

In additional embodiments, the sensors 59, 60, 61 as described herein may be configured to monitor a temperature of the generator 24 and/or gearbox 38 after reducing the predetermined rotor speed or while operating in NRO. As such, the controller 26 can adjust the speed of at least one of the fans 51, 52, 53 based on the temperature. More specifically, in a particular embodiment, if the drivetrain temperature becomes too hot during NRO and the fan speed is at a maximum for NRO, then the controller 26 can automatically reduce the rotor speed (rather than increasing fan speed) so as to maintain the noise level within allowable limits. In further embodiments, above a specific wind speed value (e.g. a measured wind parameter or an estimated wind speed), the controller 26 may be configured to assume that the wind-induced background noise is able to mask the fan noise completely such that the fan speed can be increased so as to increase the AEP.

The controller 26 may also be configured to revert back to normal operation after NRO. More specifically, if reduced noise is no longer required, the controller 26 is configured to increase the rotor speed back to the predetermined rotor speed after a predetermined time period. As such, the controller 26 is configured to increase the speed of the fans 51, 52, 53 operating at a reduced speed and/or to turn certain fans back on after the predetermined time period. The predetermined time period may correspond to a certain number of nighttime hours or may be preconfigured such that the drivetrain assembly does not overheat.

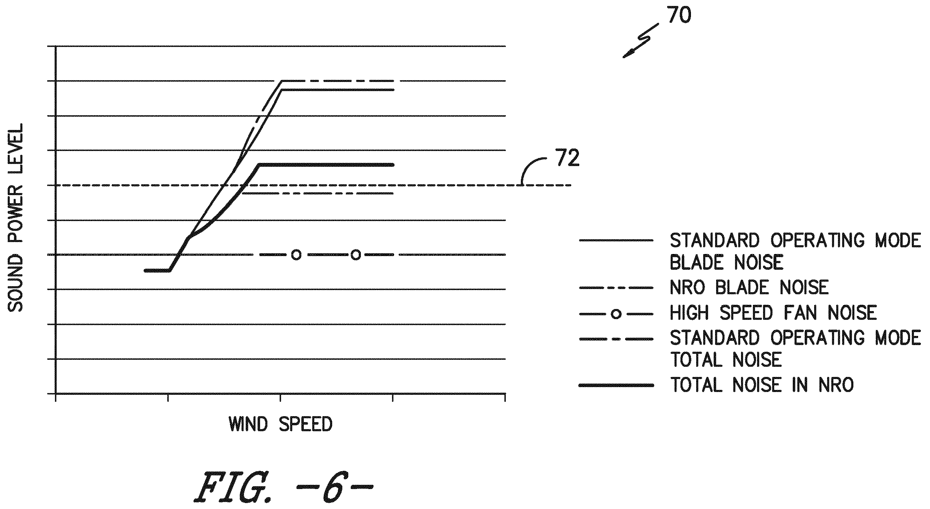

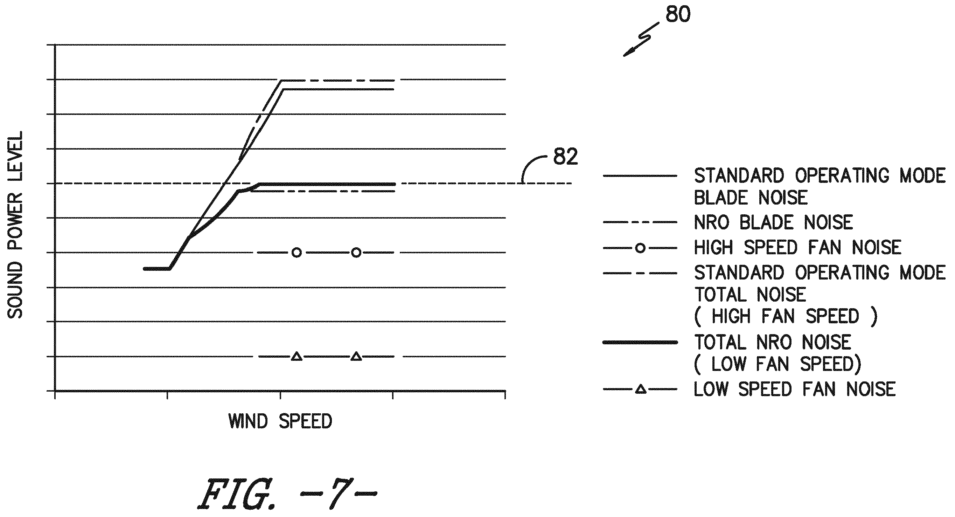

Referring now to FIGS. 6 and 7, multiple graphs are depicted that illustrate various advantages of operating the wind turbine 10 according to the present disclosure. More specifically, FIG. 6 illustrates a graph 70 of the sound level versus wind speed for a conventional wind turbine, whereas FIG. 7 illustrates a graph 80 of the sound level versus wind speed according to the present disclosure. As shown, the total NRO noise is higher for the conventional turbine (graph 70) as compared to the present disclosure (graph 80) due to the fan noise. As such, in many instances, the total NRO noise of conventional turbines exceeds the NRO noise target 72 (e.g. 100dB or any other suitable threshold). In contrast, graph 80 illustrates a total NRO noise that is equal to or less than the target threshold 82 (with the same blade noise).

Furthermore, the skilled artisan will recognize the interchangeability of various features from different embodiments. Similarly, the various method steps and features described, as well as other known equivalents for each such methods and feature, can be mixed and matched by one of ordinary skill in this art to construct additional systems and techniques in accordance with principles of this disclosure. Of course, it is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

This written description uses examples to disclose the invention, including the preferred mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A method for reducing fan noise during reduced noise operation of a wind turbine, the method comprising:
   operating the wind turbine at a predetermined rotor speed, the predetermined rotor speed associated with a predetermined power output;
   receiving a request to operate in a reduced noise operating mode;
   reducing the predetermined rotor speed so as to provide a reduced power output; and,
   in response to reducing the predetermined rotor speed, reducing a speed of one or more cooling fans of the wind turbine.
2. The method of clause 1, wherein reducing the speed of one or more of the cooling fans further comprises correlating a reduction in fan speed with a reduction in rotor speed.
3. The method of any preceding clause, wherein reducing the speed of one or more cooling fans of the wind turbine further comprises turning off one or more of the cooling fans.
4. The method of any preceding clause, wherein the one or more cooling fans are configured with a drivetrain assembly of the wind turbine, the drivetrain assembly comprising at least one of a gearbox or a generator.
5. The method of any preceding clause, wherein the gearbox comprises at least one high speed fan and at least one low speed fan.
6. The method of any preceding clause, further comprising monitoring a temperature of the gearbox after reducing the predetermined power set point and adjusting the speed of at least one of the high speed fan or the low speed fan based on the temperature.
7. The method of any preceding clause, further comprising monitoring a temperature of the generator after reducing the predetermined power set point and adjusting the speed of at least one of the cooling fans of the generator based on the temperature.
8. The method of any preceding clause, further comprising increasing a rotor speed back to the predetermined rotor speed after a predetermined time period.
9. The method of any preceding clause, further comprising increasing the speed of the one or more cooling fans after the predetermined time period.
10. A method for reducing fan noise associated with a wind turbine, the method comprising:
   operating the wind turbine in a standard operating mode via a controller, the standard operating mode associated with a first noise threshold;
   switching from the standard operating mode to a reduced noise operating mode, the reduced noise operating mode associated with a second noise threshold that is lower than the first noise threshold; and,
   in response to switching operating modes, adjusting a speed of one or more cooling fans of the wind turbine.
11. The method of any preceding clause, wherein adjusting the speed of one or more cooling fans of the wind turbine further comprises at least one of reducing a speed of one or more of the cooling fans or turning off one or more of the cooling fans.
12. The method of any preceding clause, wherein reducing the speed of one or more of the cooling fans further comprises correlating a reduction in fan speed with a reduction in rotor speed.
13. The method of any preceding clause, wherein the one or more cooling fans are configured with a drivetrain assembly of the wind turbine, the drivetrain assembly comprising at least one of a gearbox or a generator.
14. The method of any preceding clause, wherein the gearbox comprises at least one high speed fan and at least one low speed fan.
15. The method of any preceding clause, further comprising monitoring a temperature of the gearbox during the reduced noise operating mode and adjusting the speed of at least one of the high speed fan or the low speed fan based on the temperature.
16. The method of any preceding clause, further comprising monitoring a temperature of the generator during the reduced noise operating mode and adjusting the speed of at least one of the cooling fans of the generator based on the temperature.
17. The method of any preceding clause, further comprising reverting back to the standard operating mode after a predetermined time period.
18. The method of any preceding clause, wherein reverting back to the standard operating mode after a predetermined time period further comprises increasing the speed of the one or more cooling fans.
19. A system for reducing noise associated with a wind turbine, the system comprising:
   a controller communicatively coupled to a processor, the processor configured to perform one or more operations, the one or more operations comprising:
      operating the wind turbine at a predetermined rotor speed, the predetermined rotor speed associated with a predetermined power output;
      receiving a request to operate in a reduced noise operating mode;
      reducing the predetermined rotor speed so as to provide a reduced power output; and,
      in response to reducing the predetermined rotor speed, reducing a speed of one or more cooling fans of the wind turbine.
20. The system of any preceding clause, wherein the one or more cooling fans are configured with a drivetrain assembly of the wind turbine, the drivetrain assembly comprising at least one of a gearbox or a generator.

## Claims

1. A method (100) for reducing fan noise during reduced noise operation of a wind turbine (10), the method comprising:
operating the wind turbine (10) at a predetermined rotor speed, the predetermined rotor speed associated with a predetermined power output;
receiving a request to operate in a reduced noise operating mode;
reducing the predetermined rotor speed so as to provide a reduced power output; and
in response to reducing the predetermined rotor speed, reducing a speed of one or more cooling fans (51, 52, 53) of the wind turbine (10).

2. The method (100) of claim 1, wherein reducing the speed of one or more of the cooling fans (51, 52, 53) further comprises correlating a reduction in fan speed with a reduction in rotor speed.

3. The method (100) of any preceding claim, wherein reducing the speed of one or more cooling fans (51, 52, 53) of the wind turbine (10) further comprises turning off one or more of the cooling fans (51, 52, 53).

4. The method (100) of any preceding claim, wherein the one or more cooling fans (51, 52, 53) are configured with a drivetrain assembly of the wind turbine (10), the drivetrain assembly comprising at least one of a gearbox (38) or a generator (24).

5. The method (100) of claim 4, wherein the gearbox (38) comprises at least one high speed fan (52) and at least one low speed fan (51).

6. The method (100) of claim 5, further comprising monitoring a temperature of the gearbox (38) after reducing the predetermined power set point and adjusting the speed of at least one of the high speed fan (52) or the low speed fan (51) based on the temperature.

7. The method (100) of any of claims 4 to 6, further comprising monitoring a temperature of the generator (24) after reducing the predetermined power set point and adjusting the speed of at least one of the cooling fans (51, 52, 53) of the generator (24) based on the temperature.

8. The method (100) of any preceding claim, further comprising increasing a rotor speed back to the predetermined rotor speed after a predetermined time period and increasing the speed of the one or more cooling fans (51, 52, 53) after the predetermined time period.

9. A method (100) for reducing fan noise associated with a wind turbine (10), the method comprising:
operating the wind turbine (10) in a standard operating mode via a controller, the standard operating mode associated with a first noise threshold;
switching from the standard operating mode to a reduced noise operating mode, the reduced noise operating mode associated with a second noise threshold that is lower than the first noise threshold; and
in response to switching operating modes, adjusting a speed of one or more cooling fans (51, 52, 53) of the wind turbine (10).

10. The method (100) of claim 9, wherein adjusting the speed of one or more cooling fans (51, 52, 53) of the wind turbine (10) further comprises at least one of reducing a speed of one or more of the cooling fans (51, 52, 53) or turning off one or more of the cooling fans (51, 52, 53).

11. The method (100) of claim 9 or claim 10, wherein reducing the speed of one or more of the cooling fans (51, 52, 53) further comprises correlating a reduction in fan speed with a reduction in rotor speed.

12. The method (100) of any of claims 9 to 12, wherein the one or more cooling fans (51, 52, 53) are configured with a drivetrain assembly of the wind turbine (10), the drivetrain assembly comprising at least one of a gearbox (38) or a generator (24).

13. The method (100) of any of claims 9 to 12, wherein the gearbox (38) comprises at least one high speed fan (52) and at least one low speed fan (51), and wherein the method further comprises monitoring a temperature of the gearbox (38) during the reduced noise operating mode and adjusting the speed of at least one of the high speed fan (52) or the low speed fan (51) based on the temperature.

14. The method (100) of any of claims 9 to 13, further comprising monitoring a temperature of the generator (24) during the reduced noise operating mode and adjusting the speed of at least one of the cooling fans (51, 52, 53) of the generator (24) based on the temperature.

15. A system for reducing noise associated with a wind turbine (10), the system comprising:
a controller (26) communicatively coupled to a processor, the processor configured to perform one or more operations, the one or more operations comprising:
operating the wind turbine (10) at a predetermined rotor speed, the predetermined rotor speed associated with a predetermined power output;
receiving a request to operate in a reduced noise operating mode;
reducing the predetermined rotor speed so as to provide a reduced power output; and
in response to reducing the predetermined rotor speed, reducing a speed of one or more cooling fans (51, 52, 53) of the wind turbine (10).
